(19) Europäisches Patentamt
European Patent Office
Office européen des brevets

(11) Veröffentlichungsnummer: **0 286 904 B1**

(12) **EUROPÄISCHE PATENTSCHRIFT**

(45) Veröffentlichungstag der Patentschrift: **26.05.93**

(51) Int. Cl.⁵: **C08L 63/00**, C08L 33/00

(21) Anmeldenummer: **88105037.1**

(22) Anmeldetag: **29.03.88**

(54) **Epoxidharzmassen mit verbesserter Lagerstabilität.**

(30) Priorität: **09.04.87 DE 3712017**

(43) Veröffentlichungstag der Anmeldung:
**19.10.88 Patentblatt 88/42**

(45) Bekanntmachung des Hinweises auf die
Patenterteilung:
**26.05.93 Patentblatt 93/21**

(84) Benannte Vertragsstaaten:
**AT BE CH DE ES FR GB IT LI LU NL SE**

(56) Entgegenhaltungen:
**DE−C− 2 635 177**
**US−A− 3 222 420**
**US−A− 3 864 426**

(73) Patentinhaber: **BASF Aktiengesellschaft**
**Carl−Bosch−Strasse 38**
**W−6700 Ludwigshafen(DE)**

(72) Erfinder: **Blum, Rainer**
**Bannwasserstrasse 58**
**W−6700 Ludwigshafen(DE)**
Erfinder: **Rehmer, Gerd, Dr.**
**Koenigsberger Strasse 1**
**W−6712 Bobenheim−Roxheim(DE)**
Erfinder: **Osterloh, Rolf, Dr.**
**Am Kapellenbusch 2**
**W−5042 Erftstadt(DE)**
Erfinder: **Sander, Hans, Dr.**
**Petersstrasse 2**
**W−6700 Ludwigshafen(DE)**

**Beschreibung**

Die vorliegende Erfindung betrifft Epoxidharzmassen, enthaltend im wesentlichen

A) ein Epoxidharz mit einem mittleren Molekulargewicht von 300 bis 6000 und im Mittel 1,5 bis 3,0 Epoxidgruppen im Molekül,

B) ein Polyacrylatharz, erhältlich durch Polymerisation in organischen Lösungsmitteln oder Lösungsmittelgemischen von im wesentlichen

b$_1$) 30 bis 95 Gew.% Estern der Acrylsäure und/oder Methacrylsäure und/oder Ethylacrylsäure mit C$_1$ – C$_{20}$ – Alkoholen in Gegenwart von

b$_2$) 5 bis 70 Gew.% carboxylgruppenhaltigen Copolymerisaten mit einem mittleren Molekulargewicht von 500 bis 20.000, erhältlich durch Masse – oder Lösungspolymerisation von monoolefinisch ungesättigten Monomeren bei Temperaturen von 180 bis 400°C und Drücken zwischen 1 und 200 bar und

C) das bei der Herstellung der Komponenten B) verwendete Lösungsmittel oder Lösungsmittelgemisch sowie deren Verwendung für wärmehärtbare Lackierungen, Verklebungen und Beschichtungen.

Kombinationen von carboxylgruppenhaltigen Polyacrylaten und Epoxidharzen als Bindemittel für hitze – härtbare Lacke sind bekannt.

So werden in der DE – PS 26 35 177 lösungsmittelarme Einbrennlacke beschrieben, die aus carboxyl – gruppenhaltigen Acrylatharzen auf Basis eines Copolymeren, das 10 bis 35 Gew.% $\alpha,\beta$ – ungesättigte Carbonsäuren enthält und einem Epoxidharz, das mindestens 2 Oxirangruppen pro Molekül enthält, bestehen. Diese Lacke können auch übliche Katalysatoren wie tertiäre Amine oder quartäre Ammoniums – alze und übliche Hilfsmittel wie Verlaufmittel, Dispergierhilfsmittel oder Thixotropierungsmittel enthalten.

In der US – PS 3 305 601 wird eine filmbildende Zusammensetzung aus einem carboxylgruppenhaltigen Copolymer, einem Polyepoxid und einem Katalysator beschrieben, die schon bei Raumtemperatur gehärtet werden kann.

In der DE – PS 27 34 167 wird ein Verfahren zur Herstellung von Überzügen beschrieben, wobei Überzugsmassen, bestehend aus carboxylgruppenhaltigen Copolymerisaten, aliphatischen Polyepoxiden, Katalysatoren und anderen Zusatzstoffen verwendet werden.

Obwohl die Qualität der aus diesen Lacken hergestellten Überzüge sehr hoch ist und ein Einsatz dieser Lacke bei allgemeinen Industrie – Lackierungen, insbesondere für Korrosionsschutz – Lackierungen und Haushaltsgeräte – Lackierungen gewünscht wird, haben sie bisher keine sehr breite Verwendung gefunden.

Der Grund liegt in der geringen Lagerstabilität, besonders der katalysierten Mischungen, die schon bei Raumtemperatur langsam miteinander reagieren. Solche Lacke können deshalb nicht in Lackieranlagen mit Ringförderleitungen und Lagerbehältern eingesetzt werden.

Aufgabe der vorliegenden Erfindung war es, wärmehärtbare Epoxidharz – Lacke für hochwertige Lakkierungen, Verklebungen und Beschichtungen bereitzustellen, die eine gute Lagerstabilität aufweisen.

Es wurde nun gefunden, daß diese Aufgabe gelöst werden kann mit Epoxidharzmassen, enthaltend im wesentlichen

A) ein Epoxidharz mit einem mittleren Molekulargewicht von 300 bis 6000 und im Mittel 1,5 bis 3,0 Epoxidgruppen im Molekül,

B) ein Polyacrylatharz, erhältlich durch Polymerisation in organischen Lösungsmitteln oder Lösungsmittelgemischen von im wesentlichen

b$_1$) 30 bis 95 Gew.% Estern der Acrylsäure und/oder Methacrylsäure und/oder Ethylacrylsäure mit C$_1$ – C$_{20}$ – Alkoholen in Gegenwart von

b$_2$) 5 bis 70 Gew.% carboxylgruppenhaltigen Copolymerisaten mit einem mittleren Molekulargewicht von 500 bis 20.000, erhältlich durch Masse – oder Lösungspolymerisation von monoolefinisch ungesättigten Monomeren bei Temperaturen von 180 bis 400°C und Drücken zwischen 1 und 200 bar und

C) das bei der Herstellung der Komponenten B) verwendete Lösungsmittel oder Lösungsmittelgemisch.

Als Epoxidharze (A) kommen an sich bekannte Harze zur Anwendung, sofern sie ein mittleres Molekulargewicht ($\overline{M}_n$) von 300 bis 6000 und im Mittel 1,5 bis 3,0 Epoxidharzgruppen pro Molekül enthalten, vorzugsweise Verbindungen mit zwei Epoxidgruppen pro Molekül.

Bevorzugt sind Epoxidharze mit mittleren Molekulargewichten ($\overline{M}_n$) von 350 bis 5000, insbesondere 350 bis 2000. Besonders bevorzugte Epoxidharze sind zum Beispiel Glycidylether von im Mittel mindestens zwei phenolische Hydroxylgruppen pro Molekül enthaltenden Polyphenolen, die sich in üblicher Weise durch Veretherung mit einem Epihalohydrin in Gegenwart von Alkali herstellen lassen. Beispiels für geeignete Phenolverbindungen sind Bis – (4 – hydrophenyl) – 2,2 – propan (Bisphenol A), 4,4' – Dihydroxy – benzophenon, Bis – (4 – hydroxyphenyl) – 1,1 – ethan, Bis – (4 – hydroxyphenyl) – 1,1 – isobutan, Bis – (4 –

2

hydroxy – tert. – butyl – phenyl) – 2,2 – propan, Bis – (2 – hydroxynaphthylmethan, 1,5 – Dihydroxynaphthalin. In manchen Fällen ist es wünschenswert, aromatische Epoxidharze mit höherem Molekulargewicht einzu – setzen. Diese werden erhalten, indem man die oben genannten Diglycidylether mit einem Polyphenol, wie beispielsweise Bis – (4 – hydroxyphenyl) – 2,2 – propan, reagieren läßt und dann die erhaltenen Produkte mit Epichlorhydrin unter Herstellung von Polyglycidylethern weiter umsetzt.

Als Komponente ($b_1$) können Ester der Acrylsäure, Methacrylsäure oder Ethylacrylsäure mit aliphati – schen $C_1 – C_{20}$ – Alkoholen, bevorzugt $C_1 – C_8$ – Alkoholen verwendet werden, wie Methylacrylate, Methyl – methacrylat, Methylethacrylat, Ethylacrylat, Ethylmethacrylat, Propylacrylat, Propylmethacrylat, n – Butyl – acrylat, sek. – Butylacrylat, iso – Butylacrylat, tert. – Butylacrylat, n – Butylmethacrylat, sek. – Butylmethacry – lat, iso – Butylmethacrylat, tert. – Butylmethacrylat, n – Butylethacrylat, 2 – Ethylhexylacrylat, 2 – Ethylhexyl – methacrylat, Laurylacrylat, Laurylmethacrylat, Octadecylacrylat, Octadecylmethacrylat, Methylglykolacrylat, Methylglykolmethacrylat, Ethylglykolacrylat, Ethylglykolmethacrylat, n – Propylglykolacrylat, n – Propylgly – kolmethacrylat, iso – Propylglykolacrylat, iso – Propylglykolmethacrylat, n – Butylglykolacrylat, n – Butylgly – kolmethacrylat, sek. – Butylglykolacrylat, iso – Butylglykolacrylat, tert. – Butylglykolacrylat, sek. – Butylgly – kolmethacrylat, iso – Butylglykolmethacrylat und tert. – Butylglykolmethacrylat, sowie mit cycloaliphatischen $C_6 – C_{20}$ – Alkoholen, bevorzugt $C_6 – C_{10}$ – Alkoholen wie Cyclohexylacrylat, Cyclohexylmethacrylat, 4 – tert. – Butylcyclohexyl – 1 – acrylat, 2 – Decalylacrylat und Tetrahydrofurfurylacrylat sowie mit aromatischen $C_6 – C_{20}$ – Alkoholen, wie Phenylacrylat, Phenylmethacrylat, Anisylacrylat und araliphatischen $C_7 – C_{20}$ – Alkoholen, wie Benzylacrylat, Benzylmethacrylat, $\beta$ – Phenylethylacrylat und $\beta$ – Phenoxyethylacrylat.

Weiterhin sind Monoester der Acrylsäure, Methacrylsäure oder Ethylacrylsäure mit 2 – bis 6 – wertigen $C_2 – C_{18}$ – Alkoholen, bevorzugt $C_2 – C_8$ – Alkoholen, geeignet, wie $\beta$ – Hydroxyethylacrylat, $\beta$ – Hydroxyeth – ylmethacrylat, Propylenglykolmonoacrylat, Propylenglykolmonomethacrylat, Butandiol – 1,4 – monoacrylat, Butandiol – 1,4 – monomethylacrylat, Pentandiol – 1,5 – monoacrylat, Pentandiol – 1,5 – monomethacrylat, Hexandiol – 1,6 – monoacrylat, Hexandiol – 1,6 – monomethacrylat, Glycerinmonoacrylat, Glycerinmonome – thacrylat, Trimethylolpropanmonoacrylat, Trimethylolpropanmonomethacrylat, Pentaerythritmonoacrylat, Pentaerythritmonomethacrylat, 1,4 – Cyclohexan – dimethanolmonoacrylat und 1,4 – Cyclohexan – dimetha – nolmonomethacrylat.

Bevorzugt werden Methylmethacrylat, n – Butylacrylat, n – Butylmethacrylat, tert. – Butylacrylat, tert. – Butylmethacrylat, iso – Butylacrylat, iso – Butylmethacrylat, Ethylhexylacrylat, Ethylhexylmethacrylat und Hydroxyethylacrylat.

Die Komponente ($b_1$) wird in einer Menge von 30 bis 95 Gew.%, bevorzugt 50 bis 80 Gew.% eingesetzt.

Geeignete Aufbaukomponenten für die Herstellung der Copolymerisate ($b_2$) sind Vinylaromaten wie Styrol, $\alpha$ – Methylstyrol, Chlorstyrol, Vinyltoluol, tert. – Butylstyrol; Acrylsäure, Methacrylsäure, Ethylacryl – säure sowie Ester dieser Säuren mit $C_1 – C_{20}$ – Alkoholen, wie sie beispielsweise bei der Komponente ($b_1$) beschrieben sind, Monoester dieser Säuren mit 2 – bis 6 – wertigen Alkoholen, wie sie beispielsweise bei der Komponente ($b_1$) beschrieben sind, Maleinsäure, Fumarsäure sowie deren $C_1 – C_4$ – Mono – und – Dialkylester, Acrylnitril, Methacrylnitril, Acrylamidmethylolether, Methacrylamidmethylolether, Acrylamid, Methacrylamid, Glycidylacrylat und Glycidylmethacrylat, Vinylester von $C_2 – C_4$ – Carbonsäuren, wie Vinyl – acetat und Vinylpropionat, sowie Vinylether mit 3 bis 10 Kohlenstoffatomen, Vinylhalogenide wie Vinylchlo – rid und Vinylidenchlorid sowie mehrfach olefinisch ungesättigte Verbindungen wie Butadien und Isopren.

Bevorzugte Monomere sind Styrol, Acrylsäure, Methylmethacrylat, n – Butylacrylat, tert. – Butylacrylat, t – Butylmethacrylat und 2 – Ethylhexylacrylat.

Die Herstellung der Komponente ($b_2$) erfolgt nach bekannten Methoden der Massepolymerisation oder Lösungspolymerisation wie sie z.B. in der DE – OS 32 25 875 beschrieben sind, bei Temperaturen von 180 bis 400 ˚C bevorzugt 200 bis 350 ˚C, besonders bevorzugt 200 bis 300 ˚C, bei Drücken zwischen 1 und 200 bar, vorzugsweise 20 bis 50 bar in Abwesenheit oder Gegenwart von hochsiedenden Lösungsmitteln wie Aromatengemischen mit einem Siedebereich von 155 bis 185 ˚C und gegebenenfalls in Anwesenheit von Polymerisationsinitiatoren und Reglern. Die Copolymerisate ($b_2$) haben mittlere Molekulargewichte (Zahlenmittel) von 500 bis 20 000, bevorzugt 1000 bis 10 000 und Hydrierjodzahlen (DIN 53 241) von 1,3 bis 51, vorzugsweise 2,5 bis 25,4.

Als Komponente ($b_2$) können Styrol, $\alpha$ – Methylstyrol, Chlorstyrol, Vinyltoluol, tert. – Butylstyrol, Acryla – midmethylolether, Methacrylamidmethylolether, Acrylsäure, Methacrylsäure, Ethylacrylsäure weiterhin Mal – einsäure, Fumarsäure sowie deren $C_1 – C_4$ – Mono – und – Dialkylester, Maleinsäureanhydrid, Acrylnitril, Acrylamid oder Methacrylamid in Mengen von 0 bis 50 Gew.%, mitverwendet werden. Für den Fall der Mitverwendung haben sich 5 bis 50 Gew.%, bevorzugt 10 bis 40 Gew.% bewährt.

Bei der Herstellung der Komponente (B) durch Lösungspolymerisation wird das Copolymerisat ($b_2$) im allgemeinen vor der Reaktion gelöst. Dies kann in dem zur Polymerisation verwendeten Lösungsmittel geschehen, aber auch in einem Monomeren oder Monomerengemisch.

Die Komponente (b$_2$) wird in Mengen von 5 bis 70 Gew.%, bevorzugt 20 bis 50 Gew.% eingesetzt.

Die Komponenten (A) und (B) werden bei 20 bis 50°C gemischt unter Verwendung der bei der Herstellung der Komponente (B) verwendeten Lösungsmittels oder Lösungsmittelgemischs (C).

Die Epoxidharzmassen weisen im allgemeinen einen Feststoffgehalt von 50 bis 80 Gew.%, bevorzugt 70 bis 80 Gew.% auf, bei Viskositäten von 1000 bis 3000 mPas (20°C).

Die Epoxidharzmassen können mit geeigneten Katalysatoren und Hilfsstoffen zu Lacken, Beschichtungs- und Klebemitteln, kombiniert werden.

| Zulauf I: | Beispiel 1 (erfindungsgemäß) | Beispiel 2 (Vergleichsbeispiel) |
|---|---|---|
| Styrol | 116 g | 490 g |
| Butylacrylat | 350 g | 350 g |
| Methacrylsäure | - | 160 g |
| Copolymerisat, das aus 70 Gew.% Styrol und 30 Gew.% Methacrylsäure hergestellt wurde, mit einem mittleren Molekulargewicht von 2450 (gelöst in den anderen Bestandteilen von Zulauf I) | 534 g | - |
| Aromatenbenzin Siedebereich 155 bis 185°C | 250 g | 250 g |
| **Zulauf II:** | | |
| tert.-Butylperbenzoat | 40 g | 40 g |
| **Zulauf III:** | | |
| tert.-Butylperoctoat | 10 g | 10 g |
| **Vorlage** | | |
| Methoxypropylacetat | 315 g | 315 g |

In einem Reaktionsgefäß wurde die Vorlage auf 160°C erhitzt, dann wurden Zulauf I und II in 2 Stunden zugegeben, wobei die Temperatur 152 bis 158°C betrug. Es wurde 1 Stunde bei 155 bis 158°C weitergerührt, worauf Zulauf III in einer Stunde zugegeben und eine weitere Stunde nachpolymerisiert wurde.

Kenndaten der Polymerlösungen:

| | Beispiel 1 | Beispiel 2 |
|---|---|---|
| Auslaufzeit Becher 4 [s] (DIN 53 211) | 214 | 286 |
| nichtflüchtige Anteile [Gew.%] (DIN 53 216) | 65 | 65 |
| K-Wert (analog DIN 53 720) | 15,2 | 14,5 |
| 3 %ig in Aceton Aussehen | trüb | klar |

Prüfung der Polymerlösungen:

112 g der Polymerlösungen nach Beispiel 1 und 2 wurden mit 83 g Epoxidharz vom Bisphenol-A-Typ, mit einem Epoxidequivalentgewicht von ca. 190 (Epikote 828, Fa. Shell) und 6,5 g einer 10 gew.%igen Lösung von Tetrabutylammoniumiodid in Butanol gemischt.

Aus diesen Lösungen wurden Prüffilme durch aufrakeln auf entfettete Stahlbleche und Einbrennen bei 160°C für 20 Minuten hergestellt. Es wurden Filmqualität und Viskosität der Lösungen über die Lagerzeit beobachtet.

| Lagerzeit Beispiel | frisch | | 5 Tage | | 3 Wochen | | 7 Wochen | | 17 Wochen | | 30 Wochen | |
|---|---|---|---|---|---|---|---|---|---|---|---|---|
| | 1 | 2 | 1 | 2 | 1 | 2 | 1 | 2 | 1 | 2 | 1 | 2 |
| Auslaufzeit D 4 [s] (DIN 53 211) | 86 | 134 | 85 | 159 | 87 | 418 | 85 | 85 geliert | 85 | - | 97 | - |
| Pendelhärte (DIN 53 157) | 138 | 124 | 143 | 122 | 136 | 134 | 135 | 129 | 143 | - | 127 | - |
| Tiefung (DIN 53 156) | 8,6 | 7,9 | 8,4 | 8,6 | 8,8 | 9,3 | 9,9 | 9,3 | 9,1 | - | 9,4 | - |

Alle Filme sind klar und glänzend.

Die Polymerlösungen ergeben am Anfang der Lagerfähigkeitsprüfung Lackfilme von vergleichbarer Qualität. Schon nach 3 Wochen ist die Viskosität von Beispiel 2 (Vergleichsbeispiel) so stark angestiegen, daß diese Lösung nicht mehr verspritzbar wäre. Nach 17 und 30 Wochen Lagerung sind Viskosität und Lackqualität von Beispiel 1 praktisch unverändert, während Beispiel 2 nach 7 Wochen in der Flasche geliert ist.

**Patentansprüche**

1. Epoxidharzmassen, enthaltend im wesentlichen
   A) ein Epoxidharz mit einem mittleren Molekulargewicht von 300 bis 6000 und im Mittel 1,5 bis 3,0 Epoxidgruppen im Molekül,
   B) ein Polyacrylatharz, erhältlich durch Polymerisation in organischen Lösungsmitteln oder Lösungsmittelgemischen von im wesentlichen
   $b_1$) 30 bis 95 Gew.% Estern der Acrylsäure und/oder Methacrylsäure und/oder Ethylacrylsäure mit $C_1 - C_{20}$ - Alkoholen in Gegenwart von
   $b_2$) 5 bis 70 Gew.% carboxylgruppenhaltigen Copolymerisaten mit einem mittleren Molekulargewicht von 500 bis 20.000, erhältlich durch Masse - oder Lösungspolymerisation von monoolefinisch ungesättigten Monomeren bei Temperaturen von 180 bis 400°C und Drücken zwischen 1 und 200 bar und
   C) das bei der Herstellung der Komponenten B) verwendete Lösungsmittel oder Lösungsmittelgemisch.

2. Epoxidharzmassen nach Anspruch 1, enthaltend im wesentlichen
   A) ein Epoxidharz mit einem mittleren Molekulargewicht von 300 bis 6000 und im Mittel 1,5 bis 3,0 Epoxidgruppen im Molekül,
   B) ein Polyacrylatharz, erhältlich durch Copolymerisation in organischen Lösungsmitteln oder Lösungsmittelgemischen von im wesentlichen
   $b_1$) 30 bis 90 Gew.% Estern der Acrylsäure und/oder Methacrylsäure und/oder Ethylacrylsäure mit $C_1 - C_{20}$ - Alkoholen in Gegenwart von
   $b_2$) 5 bis 70 Gew.% carboxylgruppenhaltigen Copolymerisaten mit einem mittleren Molekulargewicht von 500 bis 20.000, erhältlich durch Masse - oder Lösungspolymerisation von monoolefinisch ungesättigten Monomeren bei Temperaturen von 180 bis 400°C und Drücken zwischen 1 und 200 bar, mit
   $b_3$) 5 bis 50 Gew.% sonstigen Comonomeren und
   C) das bei der Herstellung der Komponenten B) verwendete Lösungsmittel oder Lösungsmittelgemisch.

3. Epoxidharzmassen nach den Ansprüchen 1 oder 2, enthaltend ein Polyacrylatharz (B), das Monoester der Acrylsäure und/oder Methacrylsäure und/oder Ethylacrylsäure mit 1 - bis 6 - wertigen aliphatischen, cycloaliphatischen und/oder aromatischen Alkoholen als Komponente ($b_1$) einpolymerisiert enthält.

4. Epoxidharzmassen nach einem der Ansprüche 1 bis 3, enthaltend ein Polyacrylatharz (B), das als Aufbaukomponenten für die Copolymerisate ($b_2$) überwiegende Anteile von Styrol und untergeordnete Anteile von Acrylsäure, Methacrylsäure, Maleinsäure, Maleinsäureanhydrid und Estern der genannten Säuren mit $C_1 - C_{20}$ - Alkoholen einpolymerisiert enthält.

5. Epoxidharzmassen nach einem der Ansprüche 1 bis 4, enthaltend ein Polyacrylatharz (B), das Styrol, $\alpha$ - Methylstyrol, Chlorstyrol, Vinyltoluol, tert. - Butylstyrol, Acrylsäure, Methacrylsäure, Maleinsäure, Maleinsäureanhydrid, Maleinsäureester, Acrylnitril, Acrylamid, Methacrylamid, Acrylamidalkylolether und Methacrylamidalkylolether als Comonomere ($b_3$) einpolymerisiert enthält.

6. Verwendung der Epoxidharzmassen gemäß den Ansprüchen 1 bis 5 zur Herstellung von Lacken, Beschichtungs - und Klebemitteln.

7. Beschichteter Gegenstand, erhältlich unter Verwendung der Lacke und Beschichtungsmittel gemäß Anspruch 6.

**Claims**

1. An epoxy resin material essentially containing

   A) an epoxy resin having a mean molecular weight of from 300 to 6,000 and on average from 1.5 to 3.0 epoxy groups in the molecule,

   B) a polyacrylate resin obtained by polymerization, in an organic solvent or solvent mixture, of essentially

   $b_1$) from 30 to 95% by weight of esters of acrylic acid or methacrylic acid or ethylacrylic acid with $C_1 - C_{20}$ - alcohols in the presence of

   $b_2$) from 5 to 70% by weight of carboxyl - containing copolymers having a mean molecular weight of from 500 to 20,000, obtainable by bulk or solution polymerization of monoolefinically unsaturated monomers at from 180 to 400°C and under from 1 to 200 bar and

   C) the solvent mixture or solvent used in the preparation of component B).

2. An epoxy resin material as claimed in claim 1, essentially containing

   A) an epoxy resin having a mean molecular weight of from 300 to 6,000 and on average from 1.5 to 3.0 epoxy groups in the molecule,

   B) a polyacrylate resin obtainable by copolymerization, in an organic solvent or solvent mixture, of essentially

   $b_1$) from 30 to 90% by weight of esters of acrylic acid or methacrylic acid or ethylacrylic acid with $C_1 - C_{20}$ - alcohols in the presence of

   $b_2$) from 5 to 70% by weight of carboxyl - containing copolymers having a mean molecular weight of from 500 to 20,000, obtainable by bulk or solution polymerization of monoolefinically unsaturated monomers at from 180 to 400°C and under from 1 to 200 bar, with

   $b_3$) from 5 to 50% by weight of other comonomers and

   C) the solvent mixture or solvent used in the preparation of component B).

3. An epoxy resin material as claimed in claim 1 or 2, containing a polyacrylate resin (B) which contains monoesters of acrylic acid or methacrylic acid or ethylacrylic acid with monohydric to hexahydric aliphatic, cycloaliphatic or aromatic alcohols as copolymerized component ($b_1$).

4. An epoxy resin material as claimed in any of claims 1 to 3, containing a polyacrylate resin (B) which contains, as copolymerized components for copolymers ($b_2$), predominant amounts of styrene and minor amounts of acrylic acid, methacrylic acid, maleic acid, maleic anhydride and esters of the stated acids with $C_1 - C_{20}$ - alcohols.

5. An epoxy resin material as claimed in any of claims 1 to 4, containing a polyacrylate resin (B) which contains styrene, $\alpha$ - methylstyrene, chlorostyrene, vinyltoluene, tert - butylstyrene, acrylic acid, methacrylic acid, maleic acid, maleic anhydride, maleates, acrylonitrile, acrylamide, methacrylamide, acrylamidoalkylol ethers and methacrylamidoalkylol ethers as copolymerized comonomers ($b_3$).

6. Use of an epoxy resin material as claimed in any of claims 1 to 5 for producing finishes or coating or adhesive bonding material.

7. A coated article obtainable using a surface finishing or coating material as claimed in claim 6.

**Revendications**

1. Matières en résines époxydes, contenant, pour l'essentiel,

   A) une résine époxyde d'un poids moléculaire moyen de 300 à 6000 et dont la molécule comporte en moyenne de 1,5 à 3,0 radicaux époxyde,

   B) une résine de polyacrylate, que l'on peut obtenir par la polymérisation dans des solvants organiques ou des mélanges de solvants organiques de, pour l'essentiel,

   $b_1$) 30 à 95% en poids d'esters de l'acide acrylique et/ou de l'acide méthacrylique et/ou de l'acide éthylacrylique avec des alcools en $C_1$ à $C_{20}$, en présence de

   $b_2$) 5 à 70% en poids de copolymères contenant des radicaux carboxyle, d'un poids moléculaire moyen de 500 à 20.000, que l'on peut obtenir par la polymérisation en masse ou en solution de monomères à insaturation monooléfinique, à des températures de 180 à 400°C et sous des

7

pressions variant de 1 à 200 bars et

C) le solvant ou le mélange de solvants utilisé pour la préparation du composant B).

2. Matières en résines époxydes selon la revendication 1, contenant, pour l'essentiel,

A) une résine d'époxyde d'un poids moléculaire moyen de 300 à 6000 et dont la molécule comporte en moyenne de 1,5 à 3,0 radicaux époxyde,

B) une résine de polyacrylate, que l'on peut obtenir par la copolymérisation dans des solvants ou des mélanges de solvants organiques de, pour l'essentiel,

$b_1$) 30 à 90% en poids d'esters de l'acide acrylique et/ou de l'acide méthacrylique et/ou de l'acide éthylacrylique avec des alcools en $C_1$ à $C_{20}$, en présence de

$b_2$) 5 à 70% en poids de copolymères contenant des radicaux carboxyle, d'un poids moléculaire moyen de 500 à 20.000, que l'on peut obtenir par la polymérisation en masse ou en solution de monomères à insaturation monooléfinique, à des températures de 180 à 400°C et sous des pressions qui varient de 1 à 200 bars, avec

$b_3$) 5 à 50% en poids d'autres comonomères et

C) le solvant ou le mélange de solvants utilisé pour la préparation du composant B.

3. Matières en résines époxydes suivant la revendication 1 ou 2, contenant une résine de polyacrylate (B) qui contient le monoester de l'acide acrylique et/ou de l'acide méthacrylique et/ou de l'acide éthylacrylique d'alcools aliphatiques, cycloaliphatiques et/ou aromatiques, mono − à hexahydroxylés, à titre de composant ($b_1$), incorporé par polymérisation.

4. Matières en résines époxydes selon l'une quelconque des revendications 1 à 3, contenant une résine de polyacrylate (B) qui contient, à titre de composants constitutifs pour les copolymères ($b_2$) des proportions principales de styrène et des fractions mineures d'acide acrylique, d'acide méthacrylique, d'acide maléique, d'anhydride maléique et d'esters des acides précités avec des alcools en $C_1$ à $C_{20}$, incorporées par polymérisation.

5. Matières en résines époxydes selon l'une quelconque des revendications 1 à 4, contenant une résine de polyacrylate (B) qui contient du styrène, de l'$\alpha$ − méthylstyrène, du chlorostyrène, du vinyltoluène, du tert. − butylstyrène, de l'acide acrylique, de l'acide méthacrylique, de l'acide maléique, de l'anhy − dride maléique, un ester de l'acide maléique, de l'acrylonitrile, de l'acrylamide, du méthacrylamide, un éther acrylamidoalkylolique et un éther méthacrylamidoalkylolique, à titre de comonomère ($b_3$), incor − poré par polymérisation.

6. Utilisation des matières en résines époxydes selon les revendications 1 à 5, en vue de la fabrication de laques ou peintures, d'agents de revêtement ou de rechampissage et d'adhésifs ou de colles.

7. Objet revêtu, obtenu par l'emploi des laques ou peintures et des agents de revêtement ou de rechampissage selon la revendication 6.